# EUROPÄISCHE PATENTSCHRIFT

(11) **EP 1 049 599 B1**
(45) Veröffentlichungstag und Bekanntmachung des Hinweises auf die Patenterteilung: **02.05.2002**
(21) Anmeldenummer: 99907242.4
(22) Anmeldetag: 15.01.1999
(51) Int. Cl.: B60K 17/12

(54) **ELEKTRISCHES GETRIEBE**
ELECTRIC TRANSMISSION
TRANSMISSION ELECTRIQUE

(30) Priorität: 23.01.1998 DE 19802549
(43) Veröffentlichungstag der Anmeldung: 08.11.2000
(73) Patentinhaber: SIEMENS AKTIENGESELLSCHAFT, 80333 München (DE)
(72) Erfinder: SCHMIDT, Manfred, D-91074 Herzogenaurach (DE); HOLL, Eugen, D-90579 Langenzenn (DE); FETZER, Jürgen, D-91058 Erlangen (DE)
(86) Internationale Anmeldenummer: DE9900079
(87) Internationale Veröffentlichungsnummer: WO9937497

(56) Entgegenhaltungen:
- DE-A- 4 322 676
- US-A- 4 354 144
- GERHARD RIECK, ROBERT ZELINKA: "Focal Point: electric drive system" MAN RESEARCH ENGINEERING MANUFACTURING, 1996, XP000642978

## Beschreibung

Die Erfindung betrifft ein elektrisches Getriebe mit zwei Generatoren, die über ein Hochsetzgetriebe als Verteilergetriebe mit der Abtriebswelle eines Verbrennungsmotors gekoppelt sind.

Bei Fahrzeugen, die von einem Verbrennungsmotor angetrieben werden, wird die vom Verbrennungsmotor abgegebene Antriebsenergie über ein konventionelles Automatikgetriebe zunächst auf ein Differentialgetriebe und von dort auf die Antriebsachse gegeben.

Im Hinblick auf die zunehmende Verschärfung der Abgasvorschriften, kann es notwendig werden, bei diesen Fahrzeugen, z. B. Stadtbussen mit Verbrennungsmotor, den Schadstoffausstoß verringern zu müssen.

Ein elektrisches Getriebe gemäß dem Oberbegriff von Anspruch 1 ist in der DE 43 22 676 C2 beschrieben. Das bekannte elektrische Getriebe weist zwei Generatoren auf, die über ein Hochsetzgetriebe als Verteilergetriebe mit der Abtriebswelle eines Verbrennungsmotors gekoppelt sind. Das Hochsetzgetriebe ist als Riemengetriebe ausgebildet und der Verbrennungsmotor gibt seine Antriebsleistung über ein Differentialgetriebe ab.

Weiterhin ist durch die US 17 10 345 A ein Motorfahrzeug bekannt, bei dem zwei elektrische Fahrmotoren von einem als Dynamo bezeichneten Generator mit Strom versorgt werden. Beide Fahrmotoren sind über jeweils eine eigene Kardanwelle und ein eigenes Differential mit einem anzutreibenden Rad verbunden.

Aufgabe der vorliegenden Erfindung ist es, ein kompakt aufgebautes elektrisches Getriebe zu schaffen, das bei Fahrzeugen mit Verbrennungsmotor auf einfache Weise gegen ein vorhandenes Automatikgetriebe ausgetauscht werden kann.

Die Aufgabe wird erfindungsgemäß durch die Merkmale im Anspruch 1 gelöst. Eine vorteilhafte Ausgestaltung der Erfindung ist in Anspruch 2 beschrieben.

Das elektrische Getriebe nach Anspruch 1 weist zwei nebeneinander angeordnete Generatoren auf, die über ein Hochsetzgetriebe als Verteilergetriebe mit der Abtriebswelle eines Verbrennungsmotors gekoppelt sind. Das elektrische Getriebe nach Anspruch 1 umfaßt erfindungsgemäß folgende weitere Merkmale:
- Zwei nebeneinander angeordnete elektrische Fahrmotoren sind unterhalb der Generatoren angeordnet,
- den elektrischen Fahrmotoren ist ein Reduziergetriebe als Summiergetriebe nachgeordnet,
- das Hochsetzgetriebe ist in einem Anschlußflansch zwischen dem Verbrennungsmotor und den Generatoren integriert.

Das elektrische Getriebe gemäß der Erfindung ist kompakt aufgebaut und kann auf einfache Weise gegen ein vorhandenes Automatikgetriebe ausgetauscht werden.

Das elektrische Getriebe gemäß der Erfindung ermöglicht damit eine kostengünstige Umrüstung von existierenden Fahrzeugen mit Verbrennungsmotor, insbesondere von Stadtbussen mit einem dieselmechanischen Antrieb, durch einfaches Austauschen des vorhandenen Automatikgetriebes gegen das elektrische Getriebe.

Durch den Austausch des Automatikgetriebes mit dem elektrischen Getriebe nach Anspruch 1 erhält man auf einfache Weise einen Stadtbus mit einem dieselelektrischen Antrieb. Ein derartiger Stadtbus weist gegenüber einem Stadtbus mit einem dieselmechanischen Antrieb einen geringeren Verbrauch und deutlich niedrigere Emissionswerte auf, da der Verbrennungsmotor im optimalen Drehzahlbereich gehalten werden kann und die Drehzahlregelung über den elektrischen Fahrmotor stufenlos erfolgt. Verbunden mit Energiespeichern, wie z. B. Batterie, Brennstoffzelle oder Schwungradspeicher, ergibt sich so ein emissionsarmer oder sogar emissionsfreier Bus (Hybrid-Bus). Die Vorteile derartiger Hybrid-Fahrzeuge sind beispielsweise in der DE 41 33 013 A1 beschrieben.

Bei dem elektrischen Getriebe gemäß der Erfindung kann eine redundante Einspeisung realisiert werden, da jeder Generator über eine eigene unabhängige Leistungselektronik (Gleichrichter oder Umrichter) angesteuert werden kann. Außerdem ist eine optimale Anpassung an die erforderliche bzw. gewünschte Antriebsleistung auf einfache Weise möglich. Darüber hinaus können durch selektives Zuschalten oder Abschalten wenigstens eines Generators, die einzelnen Generatoren jeweils mit einem optimalen Wirkungsgrad betrieben werden.

Bei einer Ausgestaltung gemäß Anspruch 2 ist das Hochsetzgetriebe als Zahnradgetriebe ausgebildet.

Die Erfindung wird im folgenden anhand eines schematisch dargestellten Ausführungsbeispiels in der Zeichnung näher erläutert. Es zeigen:
- FIG 1: ein elektrisches Getriebe gemäß der Erfindung in Draufsicht,
- FIG 2: ein elektrisches Getriebe gemäß FIG 1 in einer Ansicht von unten.

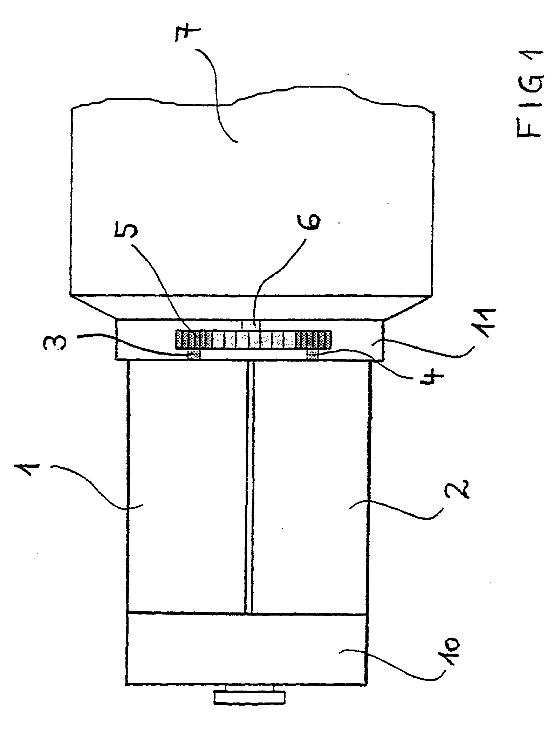

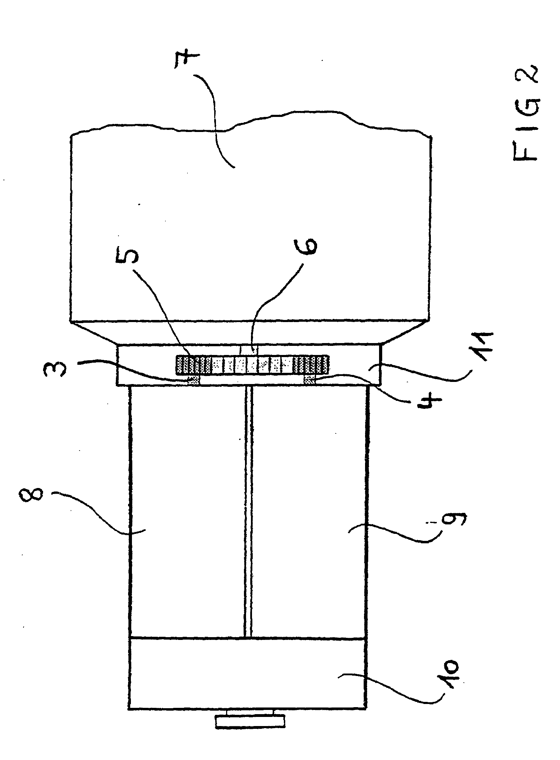

In den FIG 1 und 2 ist mit 1 ein erster Generator und mit 2 ein zweiter Generator bezeichnet, die über ihre Generatorwellen 3 und 4 mit einem Hochsetz-Zahnradgetriebe 5 gekoppelt sind. Das Hochsetz-Zahnradgetriebe 5 ist als gemeinsames Verteilergetriebe ausgebildet und weiterhin mit einer Motorwelle 6 eines Verbrennungsmotors 7 gekoppelt.

Die Gehäuse der Generatoren 1 und 2 sind über einen Anschlußflansch 11 mit dem Gehäuse des Verbrennungsmotors 7 kraftschlüssig verbunden.

Erfindungsgemäß ist das Verteilergetriebe 5 im Anschlußflansch 11 integriert.

Die von den Generatoren 1 und 2 erzeugte elektrische Energie wird in zwei elektrische Fahrmotoren 8 und 9 eingespeist.

Beide elektrische Fahrmotoren 8 und 9 geben über ein Reduziergetriebe 10, das als gemeinsames Summiergetriebe ausgebildet ist, die erzeugte mechanische Antriebsleistung ab.

Wie aus einem Vergleich von FIG 1 und 2 ersichtlich ist, liegen die beiden Fahrmotoren 8 und 9 unterhalb der beiden Generatoren 1 und 2.

## Patentansprüche

1. Elektrisches Getriebe mit zwei nebeneinander angeordneten Generatoren (1,2), die über ein Hochsetzgetriebe (5) als Verteilergetriebe mit der Abtriebswelle eines Verbrennungsmotors (7) gekoppelt sind,
**gekennzeichnet durch** folgende Merkmale:
- Zwei nebeneinander angeordnete elektrische Fahrmotoren (8,9) sind unterhalb der Generatoren (1,2) angeordnet,
- den elektrischen Fahrmotoren (8,9) ist ein Reduziergetriebe (10) als Summiergetriebe nachgeordnet,
- das Hochsetzgetriebe (5) ist in einem Anschlußflansch (11) zwischen dem Verbrennungsmotor (7) und den Generatoren (1,2) integriert.

2. Elektrisches Getriebe nach Anspruch 1, **gekennzeichnet durch** folgendes Merkmal:
- Das Hochsetzgetriebe (5) ist als Zahnradgetriebe ausgebildet.

## Claims

1. Electrical transmission with two generators (1, 2) arranged next to one another, which generators are coupled to the output shaft of an internal combustion engine (7) via a step-up reduction gear (5) acting as a transfer case, **characterized by** the following features:
- two electrical traction motors (8, 9) arranged next to one another are arranged underneath the generators (1, 2),
- a step-down reduction gear (10) is arranged downstream of the electrical traction motors (8, 9) as a summator gear train,
- the step-up reduction gear (5) is integrated in a connecting flange (11) between the combustion engine (7) and the generators (1, 2).

2. Electrical transmission according to claim 1, **characterized by** the following feature:
- the step-up reduction gear (5) is designed as a gear transmission.

## Revendications

1. Transmission électrique comportant deux génératrices (1, 2) disposées en juxtaposition, qui sont couplées, par l'intermédiaire d'une transmission (5) multiplicatrice comme transmission distributrice, à l'arbre de sortie d'un moteur (7) thermique,
**caractérisée par** les caractéristiques suivantes :
- deux moteurs (8, 9) électriques de traction, disposés en juxtaposition, sont disposés en dessous des génératrices (1, 2),
- les moteurs (8, 9) électriques de traction sont suivis d'une transmission (10) réductrice comme transmission totalisatrice,
- la transmission (5) multiplicatrice est intégrée dans un flasque (11) de raccordement entre le moteur (7) thermique et les génératrices (1, 2).

2. Transmission électrique suivant la revendication 1,
**caractérisée par** la caractéristique suivante :
- la transmission (5) multiplicatrice est réalisée sous forme de transmission à engrenages.
